(19) Europäisches Patentamt
European Patent Office
Office européen des brevets

(11) EP 4 559 781 A1

(12) EUROPEAN PATENT APPLICATION
published in accordance with Art. 153(4) EPC

(43) Date of publication:
28.05.2025 Bulletin 2025/22

(51) International Patent Classification (IPC):
B62D 1/06 (2006.01)

(21) Application number: 23843055.7

(22) Date of filing: 21.07.2023

(52) Cooperative Patent Classification (CPC):
B62D 1/06

(86) International application number:
PCT/JP2023/026714

(87) International publication number:
WO 2024/019132 (25.01.2024 Gazette 2024/04)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 22.07.2022 JP 2022117031

(71) Applicant: Kuraray Co., Ltd.
Kurashiki-shi, Okayama 710-0801 (JP)

(72) Inventors:
• MAKIYAMA, Norio
Okayama-shi, Okayama 702-8601 (JP)
• WAKIMOTO, Yoshiaki
Okayama-shi, Okayama 702-8601 (JP)
• YOSHIDA, Yasuhiro
Okayama-shi, Okayama 702-8601 (JP)

(74) Representative: Vossius & Partner
Patentanwälte Rechtsanwälte mbB
Siebertstrasse 3
81675 München (DE)

(54) **STEERING WHEEL**

(57) A steering wheel comprises a rim core portion, a resin portion molded on the rim core portion, and a skin that covers over at least part of a surface of the resin portion, in which the skin is an artificial material, and the steering wheel satisfies relationships of an expression (1) and an expression (2) below:

Expression (1): $0.65 \leq G/L \leq 0.95$

Expression (2): $1.05 \leq G/R \leq 1.35$

in which L, R, and G are a type C durometer hardness.

[Fig. 3]

**Description**

Technical Field

The present invention relates to a steering wheel.

Background Art

As the configuration of a steering wheel, for example, a configuration in which a steering wheel includes an elastomer resin layer that covers over a surface of a metal rim material and is modified to impart abrasion resistance to the surface, if necessary, and a configuration in which an elastomer resin layer that covers over a surface of a metal rim material is covered with a leather and attached or sewn have been known. Further, techniques for imparting various functions to a steering wheel or changing a texture of a surface by changing or modifying a covering material itself that covers over the surface of the steering wheel or inserting a functional material between the covering material and the elastomer resin layer have been known.

For example, PTL 1 discloses a steering wheel in which a leather covering a ring body has a coating film as an invention configured to include a covering material in which the covering material itself is changed or modified. Since the leather has the coating film, a function different from that of a portion having no coating film is imparted. The different function is described as difficulty or easiness of slipping, or the like.

PTL 2 discloses a steering wheel including a resin portion around a rim core metal, the resin portion formed from a hard foamed polyurethane having a specific surface hardness as an invention configured to include a rim material and an elastomer resin layer. PTL 2 describes that the hard foamed polyurethane can impart abrasion resistance and weather resistance. PTL 3 discloses, as the invention in which the covering material itself is changed or modified similarly to PTL 1, a skin in which compression properties of the skin at the surface thereof include a compression strain under a load of 30 $g/cm^2$ of 0.00527 to 0.0110 cm, a compression recovery property of 56 to 65%, and an average friction coefficient of the skin at the surface thereof of 0.2 to 0.4 in displacement-load properties at a region having a maximum load of 30 g or less per 1 $cm^2$. PTL 3 describes that the skin improves a grip comfort property.

For surface leather materials of steering wheels which are continuously touched by the hands of drivers, a natural leather is mainly used in terms of a sense of luxury and a feeling, largely unlike those of seats and door trims. However, in recent years, there has been a demand of replacing a natural leather by an artificial material from the viewpoint of animal welfare and the like. A synthetic leather suitable as a surface material for an automobile or the like has been developed as the invention in which the covering material itself is changed or modified similarly to PTL 1.

For example, PTL 4 discloses a synthetic leather for an automobile in which a fibrous substrate, a skin layer formed from a polyurethane resin, and a protective layer formed from a polyurethane resin are laminated in order. PTL 5 discloses a steering wheel in which a covering material including a soft polyurethane resin or the like is arranged. PTL 6 discloses a synthetic leather in which a fibrous substrate, a feeling-imparting layer formed from a gel-like substance, and a skin layer formed from a polyurethane-based resin are laminated in order.

Citation List

Patent Literature

PTL 1: JP 2018-69766 A
PTL 2: JPS59-11963 A
PTL 3: JP 2006-101935 A
PTL 4: WO2015/001732 A
PTL 5: JP 2021-20561 A
PTL 6: JP 2019-77961 A

Summary of Invention

Technical Problem

In terms of a sense of luxury and a feeling which are imparted by surface leather materials of steering wheels, a synthetic leather with the appearance of grain leather, a synthetic leather with the appearance of grain leather, and the like are replaced by a natural leather. Thus, simple replacement of a surface leather material has been publicly known.

However, for a method for changing the grip feeling of a steering wheel, there has been no idea of changing recognition in which a component other than a surface leather material is the basic structure of the steering wheel. Therefore, attention is paid only to a surface leather material, and a change in a grip feeling by changing the hardness or the touch feeling of the surface leather material has been fixated.

The synthetic leather for an automobile of PTL 4 is suitable for a vehicle seat, but is not suitable for a surface leather material of a steering wheel since the synthetic leather for an automobile is based on a circular-knit fabric, is soft, and is easily stretched. PTL 4 does not disclose application to a surface leather material of a steering wheel.

PTL 5 describes that when the asker C hardness of the covering material is 30 to 50, a driver can grip a grip portion with a good feeling which is not too soft or is not too hard. In PTL 6, the asker C hardness of the feeling-imparting layer is 0 to 15, and therefore the asker C hardness of the synthetic leather is considered to be about 45. However, all the synthetic leathers described in PTL 5 and PTL 6 are difficult to provide strict abrasion resistance required for a steering wheel and a stable steering feeling when a steering wheel is suddenly steered during an emergency avoidance or the like.

A steering wheel in which a synthetic leather is used as a surface leather material and which can achieve both a soft grip feeling and a stable steering feeling is desirable.

An object of the present invention is to provide a steering wheel which has a soft grip feeling when it is lightly gripped and a stable steering feeling when it is tightly gripped.

Solution to Problem

As a result of intensive studies to solve the above problems, the inventors of the present invention have conceived the following present invention and found that the problems can be solved.

Specifically, the present invention is as described below.

[1] A steering wheel including: a rim core portion; a resin portion molded on the rim core portion; and a skin that covers at least part of a surface of the resin portion, in which the skin is an artificial material, and the steering wheel satisfies relationships of an expression (1) and an expression (2) below:

$$\text{Expression (1): } 0.65 \leq G/L \leq 0.95$$

$$\text{Expression (2): } 1.05 \leq G/R \leq 1.35$$

in which L is a durometer hardness and represents a median of 10 values measured while a type C durometer is brought in contact with a surface side of one sheet of the skin disposed on a plate having a type D durometer hardness of 80 or more, provided that L is 10 or more and 100 or less;

R is a durometer hardness and represents a median of 10 values measured while a type C durometer is brought in contact with a surface of the resin portion molded on the rim core portion, provided that R is 10 or more and 100 or less; and

G is a durometer hardness and represents a median of 10 values measured while a type C durometer is brought in contact with the surface side of the skin with which the surface of the resin portion molded on the rim core portion is covered, provided that G is 10 or more and 100 or less.

[2] The steering wheel according to [1], in which G is 50 or more and 90 or less.

[3] The steering wheel according to [1] or [2], in which R is 75 or less.

[4] The steering wheel according to any one of [1] to [3], in which L is 90 or less.

[5] The steering wheel according to any one of [1] to [4], in which L is 75 or more.

[6] The steering wheel according to any one of [1] to [5], in which the artificial material is a material with the appearance of grain leather.

[7] The steering wheel according to any one of [1] to [6], in which the artificial material is a laminate comprising a fibrous substrate layer and a resin covering layer.

[8] The steering wheel according to [7], in which the fibrous substrate layer is a nonwoven fabric in which a resin is attached.

[9] The steering wheel according to any one of [1] to [8], in which at least part of the skin does not adhere to the surface of the resin portion.

Advantageous Effects of Invention

According to the present invention, a steering wheel which provides a soft grip feeling when it is lightly gripped and a stable steering feeling when it is tightly gripped can be provided.

Brief Description of Drawings

Fig. 1 is a plan view of an example of an annular steering wheel of an embodiment as viewed from a driver seat side.
Fig. 2 is a plan view of an example of a D-shaped steering wheel of the embodiment as viewed from the driver seat side.
Fig. 3 is a cross-sectional view of a rim portion in an example of the steering wheel of the embodiment.

Description of Embodiments

Hereinafter, the present invention will be described on the basis of an example of embodiments. However, embodiments described below are examples for embodying the technical idea of the present invention, and the present invention is not limited to the following description.

In addition, in the present description, preferred embodiments are shown, but a combination of two or more of individual preferred embodiments is also a preferred embodiment. Regarding the matters indicated by the numerical ranges, when there are several numerical ranges, it is possible to selectively combine the lower limit value and the upper limit value of the numerical ranges to obtain a preferred embodiment.

In the present description, when there is a description of a numerical range of "XX to YY", it means "XX or more and YY or less".

"Steering wheels" of embodiments mean a portion which is gripped and rotationally operated by a driver to steer a vehicle. As described below, the shapes of the "steering wheels" of the embodiments are not limited to a circle.

A steering wheel of an embodiment includes at least a rim core portion, a resin portion, and a skin, and the skin is an artificial material. An artificial material of the present invention generally represents a material in which a structure constituting the base of a material form is formed through an artificial process, but not a natural material itself, and does not mean that a raw material includes only an artifact. Specifically, although a natural leather sheet obtained using animal's or plant's integument as a raw material without losing the form thereof, and a panel made of a natural wood are a natural material, a pulverized material of animal's or plant's integument, such as a natural leather or a natural wood, a material forming a base structure, such as a woven fabric, a knitted fabric, a nonwoven fabric, or a molded sheet formed from a natural fiber such as a cotton thread or a silk thread as a raw material, and a material in which the aforementioned material is impregnated with or coated with a resin are all the artificial material, and a material forming a base structure formed from an artifact such as a synthetic fiber or a synthetic resin as a raw material is also the artificial material.

The inventors of the present invention have studied various means in which a steering wheel can provide a soft grip feeling when the steering wheel is lightly gripped and can provide a stable steering feeling when a sudden operation is performed during emergency avoidance or the like. Conventional techniques have focused only on a surface leather material, and are difficult to change a grip feeling only by changing the hardness or the touch feeling of the surface leather material. On the other hand, the present inventors have focused on the hardness of each of a resin portion and a skin, and have found that the hardnesses which satisfy specific relationships (specifically relationships of the expression (1) and the expression (2) described above) are effective means.

In consideration of this result, the present inventors have found that the aforementioned problems can be solved by satisfying the relationships of the expression (1) and the expression (2), and that when at least a base structure of a material used for the skin is formed through an artificial process, a skin which satisfies matching of a resin portion required for the expression (1) can be relatively freely produced, and a combination of the skin and the resin portion which satisfies the relationships of the expression (1) and the expression (2), that is, characters of a steering wheel can be finely designed. Thus, the present invention has been completed.

When a grip portion in the steering wheel of the embodiment is lightly gripped, rebounding like rubber is not felt, and a cushiony soft grip feeling which gives a sense of sinking the palm of the hand is obtained. In addition, a stable steering feeling which is comprehensively felt as a feeling transmitted to the palm of the hand, including a reaction force and a grip feeling which exhibit good responsibility when the grip portion is quickly gripped by the hands which have been lightly kept on the grip portion, can be obtained. In a case where as a specific example, the steering wheel of the embodiment is an automotive steering wheel, for example, when a steering operation at a steering angle of 30° with respect to a neutral position of the steering wheel is performed quickly three times in an alternating manner in left and right directions, a stable steering feeling which is comprehensively felt as a feeling transmitted to the palm of the hand, including a reaction force and a grip feeling which exhibit good responsibility can be obtained.

[Steering Wheel]

A steering wheel according to the present invention will be described while exemplifying a steering wheel used in an automobile. However, the steering wheel according to the present invention is not limited to these examples.

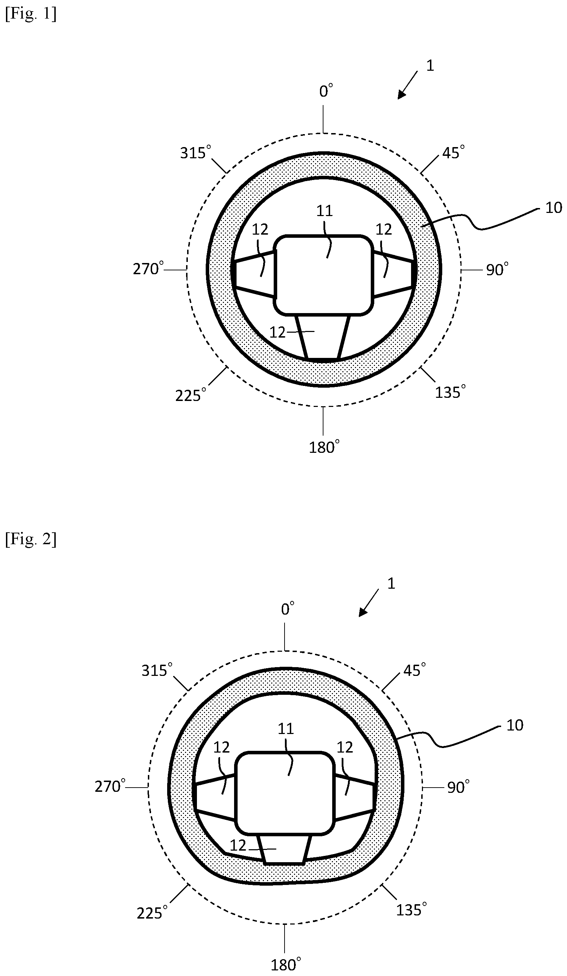

Fig. 1 and Fig. 2 are each a plan view of an example of the steering wheel of the embodiment as viewed from a driver seat side.

A steering wheel 1 shown in Fig. 1 and Fig. 2 includes at least a rim portion (also referred to as handle portion) 10, a pad portion 11, and a spoke portion 12. The rim portion 10 is a portion which is gripped and rotationally operated by a driver. The rim portion 10, the pad portion 11, and the spoke portion 12 may optionally include, for example, an accessory such as a decorating panel or a display panel.

In the steering wheel 1, a driver seat side refers to a front side, and a side of steering shaft (not shown) attached to the steering wheel 1 refers to a back side. Fig. 1 and Fig. 2 are each the plan view of the steering wheel 1 as viewed from the front side.

A direction where the steering wheel 1 stands in a direction perpendicular to the rotation axis of the steering wheel 1 refers to an upward or downward direction. In other words, a 0° direction shown in Fig. 1 and Fig. 2 refers to an upward direction, and a 180° direction refers to a downward direction. Further, a 90° direction refers to a right direction, and a 270° direction refers to a left direction.

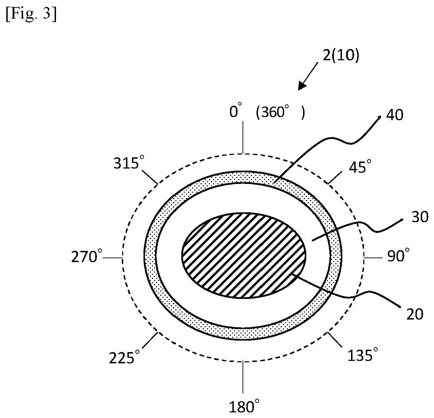

Fig. 3 is a cross-sectional view of a rim portion in an example of the steering wheel of the embodiment, and corresponds to a cross section when the 0° position of the steering wheel 1 of Fig. 1 or Fig. 2 is viewed from the left direction toward the right direction.

A rim portion 2 shown in Fig. 3 includes at least a rim core portion 20, a resin portion 30 molded on the rim core portion 20, and a skin 40 covering the resin portion 30. The skin 40 may have a portion in which the resin portion 30 is not covered at a position which is not shown in Fig. 3. Between the resin portion 30 and the skin 40, for example, a component including a temperature adjustment mechanism such as a heater or a Peltier element, a sensor mechanism such as a piezoelectric element, and an information transmission mechanism such as an oscillator may be optionally provided as long as the relationships of the expression (1) and the expression (2) and the effects of the present invention are not excessively impaired.

In the rim portion 2 shown in Fig. 3, a portion indicated at 0° to 45° and at 315° to 360° refers to an outer peripheral portion, a portion indicated at 135° to 225° refers to an inner peripheral portion, a portion indicated at 45° to 135° refers to a front portion, and a portion indicated at 225° to 315° refers to a back portion.

In the steering wheel of the embodiment, the skin needs to be provided at a portion which is gripped by a driver. For example, the skin may be provided at the entirety the rim portion 10 shown in Fig. 1 and Fig. 2, may be provided only at a portion thereof, or may be provided at a plurality of discontinuous portions, such as a portion indicated at 45° to 90° in Fig. 1 and Fig. 2, and a portion indicated at 270° to 315° alone in Fig. 1 and Fig. 2, of the rim portion 10. For example, the skin may be provided at all the outer peripheral portion, the inner peripheral portion, the front portion, and the back portion shown in Fig. 3, may be provided only at a portion such as a continuous portion from the outer peripheral portion to the front portion, or may be provided at a plurality of discontinuous portions, such as the front portion and the back portion alone.

[Shape]

The steering wheel of the embodiment is not limited to the shapes shown in Fig. 1 and Fig. 2.

In the steering wheel of the embodiment, the shape of the rim portion may be, for example, an annular shape as shown in Fig. 1, or an irregularly-shaped annular shape such as an elliptical shape, a rectangular shape, a trapezoidal shape, or a D shape as shown in Fig. 2 in which part of the rim portion is a straight line. The shape of the rim portion may be a U shape or an H shape in which a circumference of the rim portion is not successive and part of an annular shape is missed, like a control stick of an aircraft, or a rod shape having an end, such as an I shape which is not annular. It is noted that when the shape is annular, the maximum length in the width direction thereof generally refers to the diameter of the steering wheel regardless of the shape thereof.

[Durometer Hardness]

The steering wheel of the embodiment satisfies relationships of an expression (1) and an expression (2) described below:

$$\text{Expression (1): } 0.65 \leq G/L \leq 0.95$$

Expression (2): $1.05 \leq G/R \leq 1.35$

In other words, the expression (1) is a numerical value range of a ratio of G to L of 0.65 or more and 0.95 or less. In other words, the expression (2) is a numerical value range of a ratio of G to R of 1.05 or more and 1.35 or less.

In the expression (1) and the expression (2), L, R, and G mean as follows.

L is a durometer hardness and represents a median of 10 values measured while a type C durometer is brought in contact with a surface side of one sheet of the skin disposed on a plate having a type D durometer hardness of 80 or more, provided that L is 10 or more and 100 or less.

R is a durometer hardness and represents a median of 10 values measured while a type C durometer is brought in contact with a surface of the resin portion molded on the rim core portion, provided that R is 10 or more and 100 or less.

G is a durometer hardness and represents a median of 10 values measured while a type C durometer is brought in contact with the surface side of the skin with which the resin portion molded on the rim core portion is covered, provided that G is 10 or more and 100 or less.

For L, R, and G, the "measurement" while the type C durometer is brought into contact with a subject to measured is reading a measured value immediately after the type C durometer is brought in contact with the subject to be measured. "Ten measurements" for obtaining the "10 values measured" represent that (a) when measurement positions are the same, the latter measurement is performed 30 seconds or more after the former measurement, that (b) measurements are performed so that a measurement position in the n-th measurement is disposed apart from a measurement position in the n+1-th measurement at 1 cm or more (n is an integer of 1 to 9), or that (a) and (b) are combined.

In order to design a steering wheel structure having a desired hardness, which is measured in a static test of the steering wheel, that is, having a type C durometer hardness G with respect to the steering wheel surface, a combination of the skin satisfying the expression (1) and the resin portion satisfying the expression (2) is important. By satisfying both the expression (1) and the expression (2), an intended balance in the embodiment, that is, a balance between the hardness of the steering wheel measured in a static test and the hardness of the steering wheel measured in a dynamic test can be expected. In the embodiment, a soft grip feeling when the steering wheel is lightly gripped is provided, and a reducing effect on fatigue during a long-time driving operation can be expected. In addition, a stable steering feeling and a sense of grip when a sudden operation with a tight grip is performed during an emergency avoidance or the like, are provided, and an exact and quick reaction which is the most important can be expected. As described above, in the embodiment, a steering wheel achieving both comfort and a sense of security can be provided by satisfying both the expression (1) and the expression (2).

For example, an increase in type C durometer hardness L of the skin tends to decrease the value of G/L, and a decrease in type C durometer hardness L of the skin tends to increase the value of G/L. When the type C durometer hardness L of the skin satisfying the expression (1) is set by using the tendencies, a skin suitable to obtain a desired steering wheel hardness G can be selected.

For example, an increase in type C durometer hardness R of the resin portion tends to decrease the value of G/R, and a decrease in type C durometer hardness R of the resin portion tends to increase the value of G/R. When the type C durometer hardness R of the resin portion satisfying the expression (2) is set by using the tendencies, a resin portion suitable to obtain a desired steering wheel hardness G can be selected.

The steering wheel hardness G is set to a desired value by a manufacture of the steering wheel depending on the kind or properties of a vehicle on which the steering wheel is mounted, or features or preference of a main driver. On the other hand, in consideration of various assumed grip strength levels of drivers, from the viewpoint of a feeling of trust for a vehicle which is received from a steering device of operating a vehicle and is felt through the palm of the hand while the steering device is lightly gripped with relaxing, G is preferably 50 or more, more preferably 53 or more. From the viewpoint of difficulty of sensing excess fatigue on the arm, the shoulder, or the like even when a driver is a little tense and slightly tightly grips a steering device or repeatedly steers a vehicle for an extended period of time, G is preferably 90 or less, more preferably 85 or less.

In consideration of various assumed grip strength levels of drivers, from the viewpoint of a sufficient reaction force which is felt through the palm of the hand which grips and steers a steering device when a sudden operation with a tight grip is required during an emergency avoidance or the like, and a sense of security which can expect an exact and quick reaction, R is preferably 30 or more, more preferably 40 or more. From the viewpoint of difficulty of sensing excess fatigue by the tense state or the long-time driving as described above, R is preferably 75 or less, more preferably 72 or less.

From the viewpoint of abrasion resistance of the surface of the skin, L is preferably 55 or more, more preferably 75 or more. From the viewpoint of cracking resistance of the surface of the skin, L is preferably 90 or less, more preferably 86 or less.

The relationships of the expression (1) and the expression (2) need to be satisfied on a surface of at least part of the rim portion including the skin, or may be satisfied on a surface of the whole rim portion including the skin.

The relationships of the expression (1) and the expression (2) need to be satisfied in at least a portion that is gripped by a driver (grip portion), and are preferably satisfied also in a portion other than the grip portion. Specifically, when the shape of the rim portion of the steering wheel is an annular shape, an elliptical shape, or a D shape, the relationships of the expression (1) and the expression (2) need to be satisfied in (a) the portion indicated at 60° to 90° and the portion indicated at 270° to 300°, or the portion indicated at 90° to 120° and the portion indicated at 240° to 270°, of the rim portion 10 shown in Fig. 1 and Fig. 2, or (b) the front portion and/or the back portion shown in Fig. 3. In one example of a preferred embodiment, the relationships of the expression (1) and the expression (2) are satisfied also in a portion other than (b) in the portion of (a), a portion of (b) in a portion other than (a), or the portion other than (b) in the portion other than (a).

[Rim Core Portion]

A material constituting the rim core portion is not limited as long as the effects of the present invention are not impaired, and may or may not be alloy. From the viewpoint of strength and durability of the steering wheel, and the like, suitable examples of the material constituting the rim core portion include iron, aluminum, magnesium, and an alloy thereof.

[Resin Portion]

The resin portion is molded on the rim core portion.

A material constituting the resin portion is not limited as long as the expression (1) and the expression (2) are satisfied. A publicly known material may be used.

Specific examples of the material constituting the resin portion include a natural elastomer and a synthetic elastomer. Among these, from the viewpoint of easiness of selecting the durometer hardness, the material constituting the resin portion is preferably a synthetic elastomer. The synthetic elastomer is preferably a polyurethane-based elastomer, a silicone-based elastomer, or a fluorinated elastomer, more preferably an ether-based polyurethane elastomer, further preferably porous synthetic elastomers obtained by finely foaming these elastomers.

For example, the resin portion may be molded on the rim core portion by the following procedure.

A composition containing a polyol, a polyisocyanate, a foaming agent, and a cross-linker is mixed with a high-pressure foaming machine. Subsequently, the composition is injected into a mold in which the rim core portion is disposed, foamed, and then cured to form a resin which is a foamed polyurethane resin material covering the rim core portion. At that time, the durometer hardness can be adjusted to a desired value by selecting a raw material composition such as the hydroxy value of the polyol, the injection volume into the mold, a molding condition such as temperature and time during foaming and curing, and the like.

[Skin]

The skin covers over at least part of the resin portion and is the artificial material.

The skin may be leather-like, wood-like, mottled, or metallic appearance or feeling, or the like. On the whole surface or part of the skin, a pattern, a character, a symbol, and the like may be printed, or the whole surface or part of the skin may be embossed with a pattern, a character, a symbol, and the like. In the case of a leather-like skin, the appearance and feeling of the skin may imitate those of a natural leather having a skin with an appearance of suede leather or grain leather. A skin with the appearance of full grain leather or semi-grain leather in which part of the surface is not grained and a foundation (for example, a fibrous substrate layer described below) is exposed are preferred since they are popular in application of the steering wheel. That is, the artificial material is preferably a material in which most of the surface is grained.

The artificial material is not limited as long as the expression (1) and the expression (2) are satisfied. A publicly known material may be used.

In particular, from the viewpoint of easiness of selecting the durometer hardness, the artificial material is preferably a laminate (sheet material) including a fibrous substrate layer and a resin covering layer.

The thickness of the sheet material needs to be, for example, about 0.5 to 2.0 mm, but is preferably within the range of 0.8 to 1.8 mm since in the embodiment, a durometer hardness L of a suitable range is easily obtained.

Examples of a fibrous material constituting the fibrous substrate layer include a woven fabric, a knitted fabric, or a nonwoven fabric including one or more selected from the group consisting of a synthetic fiber of an amide resin, an acrylic resin, an ester resin, or the like; a natural fiber such as cotton or hemp; and a regenerated fiber such as rayon or cupra.

The woven fabric has a property in which followability to a bent shape is insufficient and the woven fabric is often curved and wrinkles around the bent portion. Since the knitted fabric more simply extends than the woven fabric, the knitted fabric has a property in which a difference in extension between the knitted fabric and the resin covering layer easily causes partial flotation or separation of the resin covering layer. In a steering wheel to which a sense of luxury or design is imparted by covering most of the outer surface with a flexible skin, but not a panel or molding, when the fibrous substrate layer is the woven fabric or the knitted fabric, the aforementioned properties cannot be sufficiently adapted to all the shapes of portions covered with the skin. Therefore, the woven fabric and the knitted fabric are not suited for the skin. The nonwoven fabric is preferred since as compared with the woven fabric and the knitted fabric, the anisotropy of extension is low due to a dense structure, excess extension can be suppressed, and the nonwoven fabric is difficult to curve, and separate or float an adhered portion to the resin covering layer. In addition to the nonwoven fabric, selecting a knitted structure in the knitted fabric can prevent the aforementioned problems from occurring. Therefore, warp knits which can suppress unwanted extension due to a densely knitted structure, such as a tricot texture and a russell texture, are preferred. That is, the warp knits are preferred than weft knits in which a knitted structure is loose, such as a circular-knitted texture and a rib-knitted texture.

The average fiber diameter of the fibrous material needs to be, for example, about 10 $\mu$m or less. From the viewpoint of workability during covering the rim portion, attractive appearance such as surface smoothness after covering, and a grip feeling described below, the average fiber diameter of the fibrous material is preferably 0.1 to 6 $\mu$m.

The fibrous substrate layer is preferably a fibrous material to which a resin is attached, and as the fibrous material, the nonwoven fabric is preferably used. That is, the fibrous substrate layer is preferably the nonwoven fabric to which a resin is attached. The nonwoven fabric has a lower apparent density than the woven fabric and the knitted fabric and includes many spaces, and therefore the resin can be attached at a high density.

In the nonwoven fabric to which the resin is attached, the ratios of the fibers and the resin and the apparent density of the fibrous substrate layer can be easily changed. When the nonwoven fabric to which the resin is attached is used as the skin of the steering wheel, the resin is hardly broken or fallen in the fibrous substrate layer, and the durometer hardness of the skin is easily adjusted.

Examples of a method for obtaining the nonwoven fabric to which the resin is attached include a method for impregnating the nonwoven fabric with the resin, and a method for applying the resin to a rear face of the nonwoven fabric. By adjusting the apparent density and the entanglement degree of the nonwoven fabric, a desired fiber structure can be designed, and a fiber structure in which the resin easily invades the inside of the nonwoven fabric can be selected.

Examples of the resin in the nonwoven fabric to which the resin is attached include a urethane resin, an acrylic resin, an ester resin, and a vinyl chloride resin. One kind of the resins may be used, or two or more kinds thereof may be used in combination.

In the nonwoven fabric to which the resin is attached, the ratio by mass of the nonwoven fabric to the resin (nonwoven fabric/resin) may be about 30/70 to about 95/5.

In order to adjust the durometer hardness, the resin is preferably a composition containing fine particles.

Examples of the fine particles include talc, magnesium silicate, calcium sulfate, aluminum silicate, calcium carbonate, magnesium oxide, magnesium carbonate, metal hydroxides such as magnesium hydroxide and aluminum hydroxide, and mica. One kind of the fine particles may be used, or two or more kinds thereof may be used in combination.

From the viewpoint of imparting flexibility and appropriate extensibility to the fibrous substrate layer while increasing the durometer hardness, the Mohs hardness of the fine particles is preferably 1.5 or more, more preferably 2 or more and 9 or less.

The ratio by mass of the resin to the fine particles (resin/fine particles) can be selected within the range of about 5/95 to about 95/5. In order to significantly obtain a fine particle-adding effect, the ratio is preferably within the range of about 15/85 to about 60/40.

As a resin material constituting the resin covering layer, for example, a polyurethane resin and a vinyl chloride resin may be used. From the viewpoint of easiness of selecting the durometer hardness, the resin covering layer is preferably in a nonporous state or a state in which foaming is low. It is noted that in the embodiment, the expression "a state in which foaming is low" refers to a state in which during observation of a cross section, although foaming is present, foaming is scattered and has a size which is equal to or less than a half of the thickness of the resin covering layer.

In order to obtain a durometer hardness L of a suitable range in the embodiment, the thickness of the resin covering layer needs to be, for example, about 0.08 to about 0.5 mm, but is preferably within the range of 0.1 to 0.4 mm in terms of a balance of the fibrous substrate layer to be laminated.

The resin covering layer preferably consists of two or more layers rather than one layer. When the resin covering layer consists of two or more layers, a first layer which is the topmost layer of the skin contains a colorant such as a pigment or a water-repellent oil-repellent agent such as fluorine resin or a silicone resin at a high ratio, second and subsequent layers hardly contain a colorant, contain a functional agent such as a flame retardant or a fragrance at a high ratio, and can achieve a sufficient adhesive strength to the fibrous substrate layer which is uneven and form a smooth surface of the skin, and the skin having both a high-quality-grade appearance and a high function can be obtained. The thickness of the first layer is preferably within the range of 0.02 to 0.3 mm, and the total thickness of the second and subsequent layers is preferably within the range of 0.06 to 0.4 mm. For example, when a functional agent is contained at a high ratio, the total thickness of the second and subsequent layers is made larger than the thickness of the first layer within the range of the thickness of the resin covering layer. When a pigment or a water-repellent oil-repellent agent is contained at a high ratio, the thickness of the first layer is made larger than the total thickness of the second and subsequent layers within the range of the thickness of the resin covering layer.

Examples of a method for laminating the resin covering layer on the fibrous substrate layer include a method for directly applying a resin to the fibrous substrate layer, and a method in which a resin is applied to a release sheet for transferring a surface design or unevenness similar to a natural leather, grain, or the like to the surface of the resin covering layer in advance, and then the release sheet was then bonded to the fibrous substrate layer. Typical examples of the release sheet include a release paper. A commercially available release paper may be used.

Examples of the application of a resin as described above include dry coating and wet coating. The dry coating is resin application in which solidification and drying are achieved by volatilizing a solvent or a dispersant from an applied resin solution or an applied resin dispersion liquid. The wet coating is resin application in which an applied resin solution is brought in contact with a solidification liquid that is a good solvent of the solvent and a poor solvent of the resin in the resin solution by immersion, spraying, or the like, resulting in solidification, and the remaining solvent and the remaining solidification liquid are replaced and dried.

In the embodiment, a combination of any of the lamination method with the resin application can be appropriately selected depending on a targeted skin design. A combination using at least any of a method for preparing the resin covering layer using the release sheet (release paper) and bonding the resin covering layer to the fibrous substrate layer and the dry coating is suitable for the skin design and production in the embodiment, and a combination thereof is the most preferred.

In order to finely adjust the texture and the appearance of the skin and impart an antimicrobial property and the like, a surface-treated coating layer may be further provided on a surface side of the resin covering layer. The kind of a surface treatment agent may be selected depending on the purpose, but a surface treatment agent containing the same resin as that of the adopted resin covering layer as a main component and a pigment, a filler, an antimicrobial agent, and the like is preferred depending on the purpose. It is preferable that the surface treatment agent be directly applied to the surface of the resin covering layer by a method such as gravure coating or screen coating. **In** order to particularly achieve homogeneous and smooth appearance and texture, the amount of the surface treatment agent in terms of solid content is preferably 50 g/m$^2$ or less, or the thickness of the surface-treated coating layer is preferably 0.03 mm or less.

Application of a resin to a rear surface side of the fibrous substrate layer, which does not have the resin covering layer is preferred from the viewpoint of easy workability of steering wheel production described below and qualities such as smooth appearance and texture of the obtained steering wheel. A resin material and a coating method are the same as those of the resin covering layer described above.

In an example of the embodiment, for example, a grained artificial leather disclosed in WO2018/221301 A may be used as an artificial material.

A method for covering the resin portion with the skin can be performed, for example, by winding the skin around at least part of the resin portion and binding edges of the skin close to each other through a sewing thread.

The skin is preferably wound around the resin portion so that the direction in which the 5% tensile strength of the skin is the highest is a direction corresponding to a direction from the front surface side toward the back surface side of the steering wheel. This is because not only easy workability of steps of winding the skin around the resin portion and binding the edges is excellent, but also the hardness G of the steering wheel is stably obtained by a combination of the skin and the resin portion which satisfy the expression (1) and the expression (2) in the embodiment regardless of a measurement place. It is noted that the expression "direction corresponding to" refers to an angle within the range of about ±15°. That is, the direction in which the 5% tensile strength of the skin is the highest preferably corresponds to the direction from the front surface side toward the back surface side.

A bonding layer of an adhesive, a pressure sensitive tape, or the like may be disposed between the resin portion and the skin as long as the effects of the present invention are not impaired. When the bonding layer is disposed, the skin is not directly bonded to the resin portion. That is, an aspect where at least part of the skin is not bonded to the surface of the resin portion is one embodiment.

As the adhesive or the pressure sensitive tape, a general adhesive or pressure sensitive tape used in the field of the present invention may be used. The bonding layer may be provided on the whole resin portion to which the skin is bonded. From the viewpoint of easy workability of a step of winding the skin and a step of binding the edges of the skin through gathering or seaming during the steering wheel production and quality such as smooth appearance and texture of the obtained steering wheel, the bonding layer is preferably provided only on part of the resin portion. Specifically, the bonding layer is preferably provided only on the front surface side or the front surface side and the back surface side of the steering wheel and is not provided on the outer peripheral portion of the steering wheel. The bonding layer preferably contains a function imparting agent such as a flame retardant. In this case, it is preferable that the area of the bonding layer be increased depending on the amount of the functional agent to be imparted and the area to be provided is close to the whole area of the resin portion.

A bonding force does not require strength which breaks the skin or the resin portion during peeling, but from the viewpoint of easy workability, the bonding-peeling potency per width of 1 cm is preferably 10 N or more on average. On the other hand, in order to obtain the effects of the steering wheel of the embodiment including a grip feeling, the bonding-peeling potency is preferably within the range of about 15 to 100 N on average.

[Applications]

The steering wheel of the embodiment is a steering device of a vehicle, and is suitable for application which requires a structure including at least a portion to be gripped by the left and right hands of a driver for steering. The term "vehicle" as used herein is a generic term of an object on which a driver, and a person, a substance, and the like are mounted and transported or which moves. Examples of the vehicle include a steam train, a train, an automobile, a ship, and an aircraft.

Examples

Hereinafter, the present invention will be described specifically by Examples and Comparative Examples, but the present invention is not limited to the Examples.

[Examples 1 to 4] [Comparative Examples 1 to 4]

An annular rim core metal around which a resin portion formed from a foam of an ether-based polyurethane elastomer was molded was prepared. Next, the whole resin portion was covered with an artificial material (sheet material) described below which was a laminate including a fibrous substrate layer and a resin covering layer, to form a skin as shown in Fig. 3. Thus, a steering wheel having a diameter of 36 cm as shown in Fig. 1 was produced. A diameter of the steering wheel of 36 cm was selected from the range of 34.5 to 37.5 cm. It is noted that when the resin portion is covered with the skin, the fibrous substrate layer is arranged so as to face the resin portion.
Specific configurations and production methods of artificial materials used in Examples and Comparative Examples are as described below.

<Example 1>

A fibrous substrate layer was prepared as described below. A microfine-fiber nonwoven fabric of nylon fibers having an average fiber diameter of 1.3 $\mu$m was impregnated with a polyurethane (PU) solution containing fine particles at a ratio of polyether-based polyurethane/fine particles (metal hydroxide, Mohs hardness: 3, average particle diameter; 3 $\mu$m) of 20/80 (mass ratio), immersed in water, resulting in wet solidification, and then dried to prepare the fibrous substrate layer in which the polyether-based PU and the fine particles were imparted in the inside of the microfine-fiber nonwoven fabric. The thickness of the fibrous substrate layer was 1.2 mm.
Subsequently, a resin covering layer was prepared and bonded on the fibrous substrate layer to produce an artificial material as described below.
The resin covering layer was prepared as follows. A polycarbonate-polyester-based high-solid PU liquid (solid content: 75% by mass, the same applies to the following) was prepared. Subsequently, this PU liquid was applied to a release sheet capable of imparting a natural leather-like appearance (release paper "DN-TP (registered trademark) DE-145" manufactured by Dai Nippon Printing Co., Ltd.) and dried to form a skin layer of 40 $\mu$m serving as a first layer. Next, an intermediate layer of 200 $\mu$m serving as a second layer was similarly formed on the first layer from a polyester-based high-solid PU liquid containing a flame retardant. In addition, a polyester-based PU adhesive liquid containing a flame retardant and a cross-linker which formed a third layer was applied to the second layer so that the thickness of the third layer after bonding to the fibrous substrate layer was 80 $\mu$m. Thus, the resin covering layer of three layers was prepared.
The resin covering layer was roughly dried, the third layer was bonded to the fibrous substrate layer, cross-linking through the cross-linker was sufficiently performed at 60°C resulting in bonding. After that, the release sheet (release paper) was peeled off. Finally, a polycarbonate-polyester-based PU aqueous dispersion solution was applied to the obtained laminate through gravure coating so that the solid content was 50 g/m$^2$, and then dried. As a result, a polycarbonate-polyester-based PU surface-treated coating layer was formed on a surface to which a natural leather-like appearance was imparted (the first layer).
Thus, an artificial material was produced.

<Example 2 and Comparative Example 4>

An artificial material was produced in the same manner as in Example 1 except that the polycarbonate-polyester-based PU surface-treated coating layer was not provided on the resin covering layer.

<Example 3 and Comparative Examples 2 and 3>

As a fibrous substrate layer, the same fibrous substrate layer as in Example 1 (provided that fine particles are not contained) was used.

A resin covering layer was prepared as follows. A polycarbonate-polyester-based PU solution was prepared. Subsequently, this PU liquid was applied to a release sheet (the aforementioned release paper manufactured by Dai Nippon Printing Co., Ltd.) and dried to form a skin layer of 20 $\mu$m serving as a first layer. Next, a polyester-based PU adhesive liquid containing a cross-linker which formed a second layer was applied to the first layer so that the thickness of the second layer after bonding to the fibrous substrate layer was 60 $\mu$m. Thus, the resin covering layer of two layers was prepared.

The resin covering layer was roughly dried, the second layer was bonded to the fibrous substrate layer, cross-linking through the cross-linker was sufficiently performed at 60°C resulting in bonding. After that, the release sheet (release paper) was peeled off. Finally, a polycarbonate-polyester-based PU surface-treated coating layer which was the same as in Example 1 was formed on a surface to which a natural leather-like appearance was imparted (the first layer). Thus, an artificial material was produced.

<Example 4>

An artificial material was produced in the same manner as in Example 1 except that the thickness of a high-solid-coating portion of the resin covering layer was changed (the surface layer of the first layer: 170 $\mu$m, the layer after bonding to the fibrous substrate layer of the third layer: 100 $\mu$m).

<Comparative Example 1>

As a fibrous substrate layer, a layer in which microfine-fiber nonwoven fabric which was the same as in Example 1 as the fibrous substrate layer was impregnated with a polyether-based PU solution (provided that fine particles are not contained) which was the same as in Example 1 and the polyether-based PU solution (provided that fine particles are not contained) which was the same as in Example 1 was applied to a surface of the microfine-fiber nonwoven fabric, followed by wet solidification and drying was used. The thickness of the fibrous substrate layer was 1.1 mm. The polyether-based PU was in the inside of the microfine-fiber nonwoven fabric, and the thickness of the wet coating layer on the surface of the microfine-fiber nonwoven fabric was 30 $\mu$m.

A resin covering layer was prepared as follows. A polycarbonate-polyester-based PU solution was prepared. Subsequently, this PU liquid was applied to a release sheet capable of imparting a natural leather-like appearance (the aforementioned release paper manufactured by Dai Nippon Printing Co., Ltd.), and the release sheet was immersed in water, followed by wet solidification and drying to form a skin layer of 80 $\mu$m serving as a first layer. Next, a polyester-based PU adhesive liquid containing a flame retardant and a cross-linker which formed a second layer and was the same as one used for the third layer in Example 1 was applied to the first layer so that the thickness of the second layer after bonding to the fibrous substrate layer was 30 $\mu$m. Thus, the resin covering layer of two layers was prepared.

The resin covering layer was roughly dried, the second layer was bonded to the wet coating surface of the fibrous substrate layer, cross-linking through the cross-linker was sufficiently performed at 60°C resulting in bonding. After that, the release sheet (release paper) was peeled off. Finally, a polycarbonate-polyester-based PU surface-treated coating layer which was the same as in Example 1 was formed on a surface (a side in contact with the release paper) of the resin covering layer after peeling the release sheet (release paper). Thus, an artificial material was produced.

The abrasion resistance (JIS K 7204-1999 Taber abrasion test, load: 4.9 N, abrasion wheel: H22) of the artificial material used in Comparative Example 1 was obviously lower than that in Example 1.

The resin portion constituting the steering wheel obtained in each of Examples and Comparative Examples was used so that the type C durometer hardness (asker C hardness) was a value R shown in Table 1.

[Type C Durometer Hardness (Asker C Hardness)]

Type C durometer hardnesses L, R, and G were measured by the following measurement method in accordance with JIS K 7312-1996.

The measurements of R and G were performed at a grip portion of the steering wheel, that was, any position in a portion covered with the skin which was a front portion within the ranges of 60° to 120° (hereinafter also referred to as "right") and 240° to 300° (hereinafter also referred to as "left") shown in Fig. 1 and the range of 45° to 135° shown in Fig. 3.

<G> For the steering wheel produced in each of Examples and Comparative Examples, a type C durometer was brought in contact with any position of the grip portion (two left and right positions), and measurement was performed ten times in total including 5 times at the left and 5 times at the right. In a method for the measurement, measurement was performed at the same position 30 seconds or more after the proximate measurement performed.

<L> Next, the skin including the measurement position of G (both the two left and right positions) was peeled. For one of the peeled skin, L was measured in the vicinity corresponding to the measurement position of G. In measurement of L, one sheet of the skin was spread on a smooth flat plate having a type D durometer hardness of 85 with a surface side faced upward, and 5 minutes or more after the measurement of G, a type C durometer was brought in contact with the vicinity corresponding to the measurement position of G, and measurement was performed ten times in total including 5 times at the left and 5 times at the right. The measurement method was as described above.

<R> For the surface of the resin portion after the skin was peeled, R was finally measured in the vicinity corresponding to the measurement position of G. In measurement of R, five minutes or more after the measurement of G, a type C durometer was brought in contact with the vicinity corresponding to the measurement position of G, and measurement was performed ten times in total including 5 times at the left and 5 times at the right. The measurement procedure was as described above.

As measured values of G, L, and R, each median of values of 10 measurements in total including 5 measurements at each of left and right positions was used.

[Evaluation]

The portions (grip portions) within the range of 60° to 120° and 240° to 300° of each of the steering wheels obtained in Examples and Comparative Examples were griped by the hands, and a grip feeling and a steering feeling and the comprehensive evaluation thereof were evaluated in accordance with the following evaluation criteria. A grip feeling and a steering feeling were evaluated by adopting as a score a median of evaluations by 13 panelists in their 30s to 50s who got used to driving an automobile. A comprehensive evaluation value was obtained by summating the score of the grip feeling and the score of the steering feeling.

<<Grip Feeling>>

A "hardness felt by the palm of the hand when a grip portion is lightly gripped by the hands" is considered as a grip feeling.

5: softness is obviously felt, and deep sinking of the palm is felt.
4: rebounding like rubber is not felt, and clear sinking of the palm is felt.
3: rebounding like rubber is not felt, and slightly shallow sinking is felt.
2: strong rebounding like tire rubber is felt.
1: hardness like tree is felt.

<<Steering feeling>>

For a prior preparation of evaluation, the steering wheel was set. Specifically, the steering wheel was installed in a steering shaft for generating a torque only by a frictional force, and set so as to generate a torque in which a force required to rotate the steering shaft was 27.7 N±0.3 N.

A "feeling which is comprehensively felt as a transmitted to the palm of the hand, including a reaction force against a turning operation which was transmitted to the palm of the hand and a grip feeling when the grip portion is then quickly gripped by the hands which have been lightly kept on the grip portion and a turning operation at a steering angle of 30° with respect to a neutral position is performed at 0.20 to 0.35 Hz three times in an alternating manner in left and right directions" is considered as a steering feeling.

3: a reaction force which exhibits extremely good responsivity to the turning operation is felt, and a highly stable feeling transmitted to the hands is felt.
2: a reaction force which exhibits good responsivity to the turning operation is felt, and a stable feeling transmitted to the hands is felt.
1: a lag of response to the turning operation and an unsatisfactory feeling transmitted to the hands are felt.

[Table 1]

| | | | Example | | | | Comparative Example | | | |
|---|---|---|---|---|---|---|---|---|---|---|
| | | | 1 | 2 | 3 | 4 | 1 | 2 | 3 | 4 |
| Asker C hardness | | L | 86 | 85 | 78 | 90 | 45 | 78 | 78 | 85 |
| | | R | 71 | 60 | 40 | 72 | 50 | 35 | 75 | 40 |
| | | G | 76 | 67 | 53 | 78 | 48 | 45 | 76 | 58 |
| Expression (1) | | G/L | 0.88 | 0.79 | 0.68 | 0.87 | 1.07 | 0.58 | 0.97 | 0.68 |
| Expression (2) | | G/R | 1.07 | 1.12 | 1.33 | 1.08 | 0.96 | 1.29 | 1.01 | 1.45 |
| Evaluation | | Grip feeling | 3 | 4 | 5 | 3 | 1 | 3 | 2 | 3 |
| | | Steering feeling | 2 | 2 | 2 | 3 | 1 | 1 | 2 | 1 |
| | | Comprehensive evaluation | 5 | 6 | 7 | 6 | 2 | 4 | 4 | 4 |

The steering wheels of Examples satisfied the relationships of the expression (1) and the expression (2), and the comprehensive evaluation of a grip feeling and a steering feeling had scores of 5 or more. On the other hand, the steering wheels of Comparative Examples did not satisfy the relationships of both or any of the expression (1) and the expression (2), and the comprehensive evaluation of a grip feeling and a steering feeling had scores of 4 or less.

Therefore, it is found that when the relationships of the expression (1) and the expression (2) are satisfied, the steering wheel of the embodiment has a soft grip feeling when it is lightly gripped and a stable steering feeling when it is tightly gripped.

Even when the diameter of the steering wheel is changed to the range of 34.5 to 37.5 cm or the shape of the steering wheel is changed to an elliptical shape or a D shape, the grip portion is arranged similarly to the steering wheels of Examples described above. Accordingly, evaluation results similar to those in Examples are reasonably expected to be obtained.

Even when in covering the resin portion with the skin, a portion which covers the skin is changed so as to be restricted to the grip portion, but not the whole resin portion, a portion which is not gripped is not involved in a grip feeling and a steering feeling. Accordingly, evaluation results similar to those in Examples are reasonably expected to be obtained.

Industrial Applicability

The steering wheel of the embodiment is a steering device of a vehicle such as a steam train, a train, an automobile, a ship, or an aircraft, and can be used in application which requires a structure including at least a portion to be gripped by the left and right hands of a driver for steering.

Reference Signs List

1: steering wheel
2: rim portion
10: rim portion
11: pad portion
12: spoke portion
20: rim core portion
30: resin portion
40: skin

Claims

1. A steering wheel comprising:

a rim core portion;

a resin portion molded on the rim core portion; and
a skin that covers over at least part of a surface of the resin portion, wherein:

the skin is an artificial material, and
the steering wheel satisfies relationships of an expression (1) and an expression (2) below:

$$\text{Expression (1): } 0.65 \leq G/L \leq 0.95$$

$$\text{Expression (2): } 1.05 \leq G/R \leq 1.35$$

wherein L is a durometer hardness and represents a median of 10 values measured while a type C durometer is brought in contact with a surface side of one sheet of the skin disposed on a plate having a type D durometer hardness of 80 or more, provided that L is 10 or more and 100 or less;
R is a durometer hardness and represents a median of 10 values measured while a type C durometer is brought in contact with a surface of the resin portion molded on the rim core portion, provided that R is 10 or more and 100 or less; and
G is a durometer hardness and represents a median of 10 values measured while a type C durometer is brought in contact with the surface side of the skin with which the surface of the resin portion molded on the rim core portion is covered, provided that G is 10 or more and 100 or less.

2. The steering wheel according to claim 1, wherein G is 50 or more and 90 or less.

3. The steering wheel according to claim 1 or 2, wherein R is 75 or less.

4. The steering wheel according to any one of claims 1 to 3, wherein L is 90 or less.

5. The steering wheel according to any one of claims 1 to 4, wherein L is 75 or more.

6. The steering wheel according to any one of claims 1 to 5, wherein the artificial material is a material with an appearance of grain leather.

7. The steering wheel according to any one of claims 1 to 6, wherein the artificial material is a laminate comprising a fibrous substrate layer and a resin covering layer.

8. The steering wheel according to claim 7, wherein the fibrous substrate layer is a nonwoven fabric in which a resin is attached.

9. The steering wheel according to any one of claims 1 to 8, wherein at least part of the skin does not adhere to the surface of the resin portion.

[Fig. 1]

[Fig. 2]

[Fig. 3]

## INTERNATIONAL SEARCH REPORT

| International application No. |
|---|
| **PCT/JP2023/026714** |

| A. | CLASSIFICATION OF SUBJECT MATTER |
|---|---|

**B62D 1/06**(2006.01)i
FI:  B62D1/06

According to International Patent Classification (IPC) or to both national classification and IPC

| B. | FIELDS SEARCHED |
|---|---|

Minimum documentation searched (classification system followed by classification symbols)

B62D1/04

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | JP 57-178970 A (TOYODA GOSEI KK) 04 November 1982 (1982-11-04) specification, p. 2, upper right column, line 8 to specification, p. 3, upper left column, line 2, fig. 1 | 1-5 |
| Y | specification, p. 2, upper right column, line 8 to specification, p. 3, upper left column, line 2, fig. 1 | 6-9 |
| Y | JP 2017-61051 A (KURARAY CO) 30 March 2017 (2017-03-30) paragraphs [0022], [0032], [0053], fig. 1 | 6-9 |
| Y | JP 60-139881 A (NHK SPRING CO LTD) 24 July 1985 (1985-07-24) specification, p. 2, upper left column, line 5 | 9 |
| A | JP 2019-137096 A (NIHON PLAST CO LTD) 22 August 2019 (2019-08-22) | 1-9 |
| A | JP 2012-201164 A (TOYODA GOSEI KK) 22 October 2012 (2012-10-22) | 1-9 |

☐ Further documents are listed in the continuation of Box C. ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **18 August 2023** | **26 September 2023** |

| Name and mailing address of the ISA/JP | Authorized officer |
|---|---|
| **Japan Patent Office (ISA/JP)** **3-4-3 Kasumigaseki, Chiyoda-ku, Tokyo 100-8915 Japan** | |
| | Telephone No. |

Form PCT/ISA/210 (second sheet) (January 2015)

## INTERNATIONAL SEARCH REPORT
### Information on patent family members

International application No.

**PCT/JP2023/026714**

| Patent document cited in search report | | | Publication date (day/month/year) | Patent family member(s) | | | Publication date (day/month/year) |
|---|---|---|---|---|---|---|---|
| JP | 57-178970 | A | 04 November 1982 | (Family: none) | | | |
| JP | 2017-61051 | A | 30 March 2017 | (Family: none) | | | |
| JP | 60-139881 | A | 24 July 1985 | (Family: none) | | | |
| JP | 2019-137096 | A | 22 August 2019 | US | 2019/0241204 | A1 | |
| | | | | DE | 102019000126 | A1 | |
| | | | | CN | 110116750 | A | |
| JP | 2012-201164 | A | 22 October 2012 | US | 2012/0240720 | A1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2018069766 A
- JP S5911963 A
- JP 2006101935 A
- WO 2015001732 A
- JP 2021020561 A
- JP 2019077961 A
- WO 2018221301 A